# EUROPÄISCHE PATENTSCHRIFT

(11) **EP 0 929 415 B1**
(45) Veröffentlichungstag und Bekanntmachung des Hinweises auf die Patenterteilung: **19.07.2000**
(21) Anmeldenummer: 97912017.7
(22) Anmeldetag: 25.09.1997
(51) Int. Cl.: B60Q 1/14

(54) **LENKSTOCKSCHALTER FÜR KRAFTFAHRZEUGE**
STEERING COLUMN SWITCH FOR A MOTOR VEHICLE
COMMUTATEUR FIXE A LA COLONNE DE DIRECTION

(30) Priorität: 01.10.1996 DE 19640501; 04.01.1997 DE 19700175
(43) Veröffentlichungstag der Anmeldung: 21.07.1999
(73) Patentinhaber: EATON CONTROLS GmbH & Co. KG, 55445 Langenlonsheim (DE)
(72) Erfinder: RUDOLPH, Gerd, D-55459 Aspisheim (DE); KHOURY, Josef, Farmington Hills, MI 48331 (US)
(74) Vertreter: Becker, Bernd, Dipl.-Ing.
(86) Internationale Anmeldenummer: DE9702203
(87) Internationale Veröffentlichungsnummer: WO9814347

(56) Entgegenhaltungen:
- EP-A- 0 768 688
- WO-A-96/23675
- DE-A- 3 532 532

## Beschreibung

Die Erfindung bezieht sich auf einen Lenkstockschalter mit einem am Mantelrohr einer Lenksäule eines Kraftfahrzeuges festgelegten Träger, der eine mit elektrischen Kontaktelementen bestückte Leiterplatte aufweist, auf die die Schaltfunktionen mindestens eines am Träger angeordneten Wischerund/oder Blinker- und/oder Fahrtlichtschalters übertragen werden, wobei der Träger mit den Schaltern als vormontierte modulare Baueinheit an dem Mantelrohr montiert ist.

Kraftfahrzeuge bestehen bekanntermaßen aus einer Vielzahl von komplizierten Baugruppen, wobei die an dem Mantelrohr des Kraftfahrzeuges anzubringende Baugruppe eines Lenkstockschalters einen Schwerpunkt bildet.

Lenkstockschalter sind üblicherweise radial zur Lenksäule an deren Mantelrohr angebracht, wodurch bei Betätigung des Lenkrades und damit der im Mantelrohr geführten Lenksäule der Lenkstockschalter gegenüber dem Lenkrad unbeweglich ist. Der Lenkstockschalter umfaßt in der Regel einen Blinkerschalter und einen Fahrtlichtschalter, wobei häufig der Fahrtlichtschalter als Drehschalter in dem Schalthebel des Blinkerschalters integriert ist. Weiterhin umfaßt der Lenkstockschalter häufig einen Wischerschalter für die stufenweise Betätigung der Scheibenwischer und der Betätigung der Schaltfunktionen für die Scheibenwaschanlage. Solche Lenkstockschalter sind beispielsweise aus der DE-AS 28 10 790 und der DE 35 32 532 C2 bekannt. Jeder Lenkstockschalter besitzt eine Vielzahl von miteinander in Wirkverbindung stehenden Bauteilen, die eine Große Anzahl von Schaltfunktionen realisieren. Diese auf engstem Raum untergebrachten Bauteile bewirken somit einen komplizierten Aufbau des Lenkstockschalters. Daher werden die einzelnen Bauteile in Abhängigkeit vom Fahrzeugtyp mehr oder weniger vormontiert und anschließend an einen am Mantelrohr der Lenksäule angeordneten Träger montiert.

Ähnliche Verhältnisse liegen bei einem Zündanlaßschalter mit integriertem Lenkschloß vor, da der Zündanlaßschalter häufig mit weiteren Schaltfunktionen versehen wird, wie beispielsweise mit einem Immobiliser, der mit einem im Zündschlüssel integrierten Transponder zusammenwirkt. Zündanlaßschalter werden sonach immer komplizierter, weil darin Codeerkennungssysteme, die das Kraftfahrzeug gegen unbefugte Benutzung schützen sollen, integriert sind.

Die beiden Baugruppen Lenkstockschalter und Zündanlaßschalter werden bei der Montage des Kraftfahrzeuges getrennt am Mantelrohr befestigt, wobei der Zündanlaßschalter meistens entfernt vom Lenkstockschalter angeordnet ist. Die Kraftfahrzeug-Industrie fordert jedoch aus technologischer Sicht eine Verkürzung der Montagezeiten, insbesondere am Fließband, beim Zusammenbau des Kraftfahrzeuges.

Die den nächstliegenden Stand der Technik bildende WO-A-96/23674 offenbart einen Lenkstockschalter für Kraftfahrzeuge mit einem am Mantelrohr einer Lenksäule des Kraftfahrzeuges festgelegten Träger, an dem mindestens ein Wischer- und/oder Blinker- und/oder Fahrtlichtschalter angeordnet ist. Der Träger des Lenkstockschalters weist eine mit Kontaktelementen bestückte Leiterplatte auf, auf die Schaltfunktionen des Wischer- und/oder Blinker- und/oder Fahrtlichtschalters übertragen werden. Weiterhin ist der Träger mit den Schaltern als vormontierte modulare Baueinheit an dem Mantelrohr montierbar.

Es ist Aufgabe der Erfindung, einen Lenkstockschalter der eingangs genannten Art zu schaffen, in den auf einfache Weise ein Zündanlaßschalter integriert ist, wobei die Anzahl der Bauteile, die zur Schalterinstallation an dem Mantelrohr der Lenksäule gehören, verringert ist.

Erfindungsgemäß wird die Aufgabe dadurch gelöst, daß
- der Träger einstückig mit einer außenseitigen Aufnahme für einen Zündanlaßschalter ausgebildet ist, und
- die Schaltfunktionen des Zündanlaßschalters über eine mit einem Schlüssel betätigte Nockensteuerung des Zündanlaßschalters auf die Kontaktelemente der Leiterplatte übertragen werden.

In dem Träger des Lenkstockschalter ist somit einerseits die Leiterplatte für die Realisierung der Schaltfunktionen des Lenkstockschalters und des Zündanlaßschalters aufgenommen und andererseits eine außenseitige Aufnahme für den Zündanlaßschalter ausgebildet. Dadurch wird die Gesamtheit der Schaltfunktionen auf eine einzige, im Lenkstockschalter vorgesehene Leiterplatte übertragen und konzentriert. Es ist daher nicht mehr erforderlich, im Lenkstockschalter eine Vielzahl von elektrischen Kabeln unterzubringen, die unnötig viel Platz beanspruchen und darüber hinaus störanfällig sind. Des weiteren entfallen die elektrischen Kabelverbindungen des Zündanlaßschalters, da dessen Schaltfunktionen nun direkt mittels der mit dem Schlüssel betätigten Nockensteuerung des Zündanlaßschalters auf die Kontaktelemente der Leiterplatte am Träger übertragen werden und somit in den Lenkstockschalter integriert sind. Von besonderem Vorteil ist hierbei, daß der vormontierte Zündanlaßschalter als Ganzes in die Aufnahme des Trägers des ebenfalls bereits vormontierten Lenkstockschalters eingesetzt werden kann. Dieser wird dann komplett als modulare Baueinheit an der Lenksäule des Kraftfahrzeuges montiert. Hierdurch wird die Anzahl der benötigten Bauteile verringert, der Montageaufwand vermindert und die Montagezeit am Fließband bei der Vormontage und beim Zusammenbau des Kraftfahrzeuges verkürzt. Es erfolgt also eine funktionale baugruppenmäßige Trennung zwischen Mechanik und Elektrik.

Alternativ wird die Aufgabe auch dadurch gelöst, daß
- ein Zündanlaßschalter getrennt vom Träger mittels einer Klemmverbindung als vormontierte modulare Baueinheit an dem Mantelrohr befestigt ist, und
- die Schaltfunktionen des Zündanlaßschalters über eine mit einem Schlüssel betätigte Nockensteuerung des Zündanlaßschalters auf die Kontaktelemente der Leiterplatte übertragen werden.

Diese alternative Lösung weist hinsichtlich der Leiterplatte und der Kombination der Schaltfunktionen des Lenkstockschalters in Verbindung mit dem Zündanlaßschalter die gleichen Vorteile auf wie bei der erstgenannte Lösung. Hierbei ist zwar der Zündanlaßschalter nicht unmittelbar in den Träger des Lenkstockschalters integriert, sondern als separat vormontiertes Bauteil am Mantelrohr der Lenksäule in unmittelbarer Nähe des Lenkstockschalters montiert, jedoch werden die Schaltfunktionen des Zündanlaßschalters auf Grund der Nähe zum Träger direkt über die mit dem Schlüssel betätigte Nockensteuerung des Zündanlaßschalters auf die Kontaktelemente der am Träger angebrachten Leiterplatte übertragen.

Um den Montageaufwand des als separate modulare Baueinheit vorgesehenen Zündanlaßschalters zu vereinfachen und eine schnelle Montage zu ermöglichen, besteht zweckmäßigerweise die Klemmverbindung aus einer das Mantelrohr übergreifenden Schelle und einer dazu korrespondierenden, am Zündanlaßschalter ausgebildeten Gegenschelle. Bevorzugt ist hierbei die das Mantelrohr übergreifende Schelle mittels Schrauben mit der am Zündanlaßschalter ausgebildeten Gegenschelle verbunden. Dadurch ist mit wenigen Handgriffen der Zündanlaßschalter schnell am Mantelrohr zu befestigen.

Bei einer vorteilhaften Ausgestaltung der Erfindung ist der Wischer- und/oder Blinker- und/oder Fahrtlichtschalter mittels Klipsverbindungen am Träger befestigt. Durch einfaches Einstecken der Schalter in zugehörige Aufnahmen des Trägers sind diese fest in den Träger integriert. Zu Reparatur- und Wartungszwecken ermöglicht das naturgemäß einfache Lösen der Klipsverbindungen eine schnelle und leichte Herausnahme der Schalter aus ihren zugeordneten Aufnahmen.

Zur weiteren Verringerung des Montageaufwandes ist nach einer Weiterbildung der Erfindung der Träger mittels einer Klipsverbindung oder eines Bajonett-Verschlusses auf dem Mantelrohr festgelegt, wobei sich der Träger auf einem auf der Lenksäule angeordneten Kugellager abstützt. Das Kugellager wird bereits während der Vormontage in den Träger des Lenkstockschalters eingebracht und bei dessen Montage auf die Lenksäule aufgezogen, so daß durch die Klipsverbindung oder den Bajonett-Verschluß des Trägers mit dem Mantelrohr der Lenkstockschalter starr auf diesem befestigt ist.

Nach einer weiteren Ausbildung der erfindungsgemäßen Lösungen sind die elektrischen Kontaktelemente der Leiterplatte als Mikroschalter ausgebildet. Die Mikroschalter sind vielseitig einsetzbar, hoch belastbar und gegen mechanische Beanspruchung widerstandsfähig und zeichnen sich insbesondere durch hohe Zuverlässigkeit aus. Alternativ dazu können die elektrischen Kontaktelemente der Leiterplatte als Schaltkontakte oder dergleichen ausgebildet sein, wie sie hinlänglich bekannt sind.

Um die auf die Leiterplatte übertragenen Schaltfunktionen wirksam umsetzen zu können, ist die Leiterplatte mit einem rechnergesteuerten elektronischen Steuersystem des Kraftfahrzeuges verbunden. Darüber hinaus ist die Leiterplatte mit einem an dem Träger befestigten Deckel abgedeckt. Dadurch wird die Leiterplatte vor äußeren Einflüssen, wie Beschädigungen, Feuchtigkeit und Staub, geschützt.

Häufig sind im Inneren des Lenkstockschalters vorgesehene Schaltkontakte der Korrosion oder infolge von Überbeanspruchung einer Bruchgefahr ausgesetzt. Um dies zu verhindern und eine höhere Zuverlässigkeit zu erreichen, weist bevorzugt der Zündanlaßschalter eine mit einem Schlüssel betätigbare Nokkensteuerung auf, mit der die auf der Leiterplatte angeordneten elektrischen Kontaktelemente beaufschlagbar sind. Eine unterschiedliche Ausbildung der Nocken bewirkt somit unterschiedliche Schaltfunktionen, die auf die Leiterplatte im Träger des Lenkstockschalters übertragen werden.

Zweckmäßigerweise ist in den Träger ein elektrisches Übertragungssystem für eine Airbag-Einrichtung integriert. Ein solches Übertragungssystem umfaßt in der Regel eine spiralförmige Wickelfeder, die als elektrische Verbindungseinrichtung zwischen zwei sich relativ zueinander bewegenden Teilen verwendet wird, wie dies bei einem sich gegenüber dem Lenkstockschalter drehenden, einen Airbag aufweisenden Lenkrad der Fall ist. Somit ist ebenfalls das elektrische Übertragungssystem in die vormontierte modulare Baueinheit des Lenkstockschalters integriert, wodurch der Montageaufwand weiter verringert wird.

Der der Erfindung zugrundeliegende Gedanke wird in der nachfolgenden Beschreibung anhand zweier Ausführungsbeispiele, die in der Zeichnung dargestellt sind, näher erläutert. Es zeigt:
- Fig. 1: eine perspektivische Rückansicht eines erfindungsgemäßen Lenkstockschalters,
- Fig. 1a: eine Explosivdarstellung des Lenkstockschalters nach Fig. 1,
- Fig. 2: eine perspektivische Rückansicht eines alternativen Lenkstockschalters nach der Erfindung,
- Fig. 2a: eine Explosivdarstellung des Lenkstockschalters in entgegengesetzter Blickrichtung nach Fig. 2 und
- Fig. 2b: eine perspektivische Teilansicht des Lenkstockschalters nach Fig. 2 zur Montage an der Lenksäule eines Kraftfahrzeuges.

In den Zeichnungen veranschaulicht jeweils der Pfeil I die Blickrichtung des Fahrzeugführers auf den Lenkstockschalter 1, der an einem gestellfest angeordneten starren Mantelrohr 3 einer darin drehbeweglich geführten Lenkssäule 4 montierbar ist. Der Lenkstockschalter 1 weist als wesentlichen Bestandteil einen einstückig ausgebildeten Träger 5 auf. Darüber hinaus umfaßt der Lenkstockschalter 1, aus der Sicht des Fahrzeugführers gesehen, linksseitig einen Blinkerschalter 8 mit zugehörigem Schalthebel 6 zur Fahrtrichtungsanzeige, wobei in dem Schalthebel 6 des Blinkerschalters 8 ein als Drehschalter ausgebildeter Fahrtlichtschalter 33 integriert ist. Rechtsseitig ist der Lenkstockschalter 1 mit einem Wischerschalter 9 mit zugehörigem Schalthebel 7 für die Scheibenwischer versehen, wobei in dem Schalthebel 7 des Wischerschalters 9 ein Dreh-Tast-Schalter 34 für unterschiedliche Intervallstufen der Scheibenwischerbetätigung und der Betätigung der Scheibenwaschanlage integriert ist. Der Blinkerschalter 8 und der Wischerschalter 9 weisen jeweils außenseitig Lösungstasten 10 auf, die mit dazu korrespondierenden Aufnahmeelementen 11 im Träger 5 eine Klipsverbindung 12 bilden, wenn der Blinkerschalter 8 bzw. der Wischerschalter 9 in den Träger 5 eingeschoben wird. Darüber hinaus weisen der Blinkerschalter 8 und der Wischerschalter 9 jeweils ein sich radial nach innen erstreckendes Schaltglied 13 auf.

Am Träger 5 ist ein elektronischer Baustein 14 angeordnet, der beispielsweise bei einem Kraftfahrzeug mit Automatikgetriebe dessen Parkstellung erkennt und eine Sperrfunktion ausübt. Weiterhin ist am Träger 5, aus der Blickrichtung des Fahrers (Pfeil I) vor dem Blinkerschalter 8 und dem Wischerschalter 9 eine mit mehreren Mikroschaltern MS bestückte Leiterplatte 15 angeordnet. Die Mikroschalter MS sind von den Schaltgliedern 13 des Blinkerschalters 8 und des Wischerschalters 9 betätigbar und realisieren deren jeweilige Schaltfunktionen. Die Leiterplatte 15 ist mit einer Multiplex-Elektronik, Immobiliser-Elektronik usw. ausgerüstet und mit einem nicht dargestellten rechnergesteuerten elektronischen Steuersystem des Kraftfahrzeuges verbunden. Ein am Träger 5 befestigter Deckel 16 überdeckt die Leiterplatte 15, um diese vor äußeren Einflüssen zu schützen. Der Deckel 16 nimmt ein eine elektrische Wickelfeder umfassendes Übertragungssystem 17 auf, das als elektrischer Leiter zu einer nicht dargestellten Airbag-Einrichtung im Lenkrad des Kraftfahrzeuges gehört. Das elektrische Übertragungssystem 17 ist von einer am Deckel 16 befestigten Abdeckplatte 18 verdeckt.

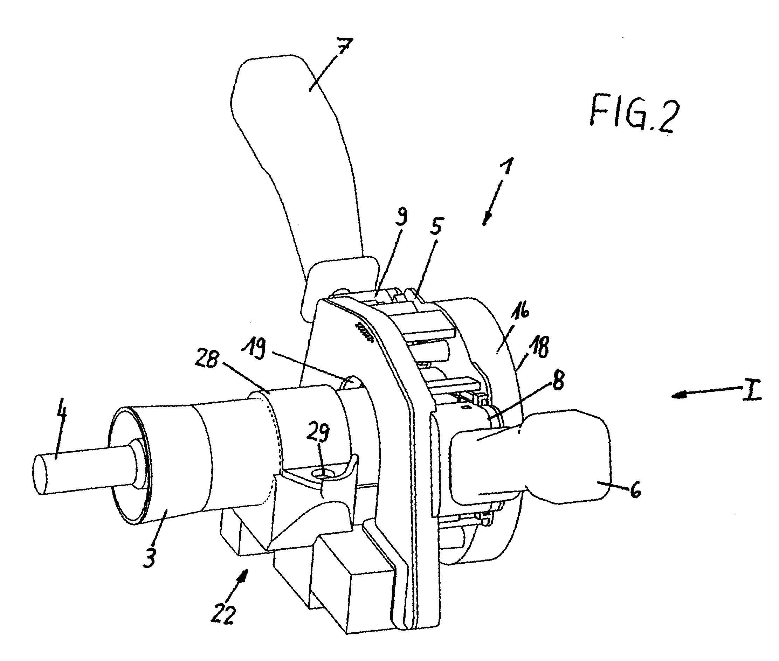

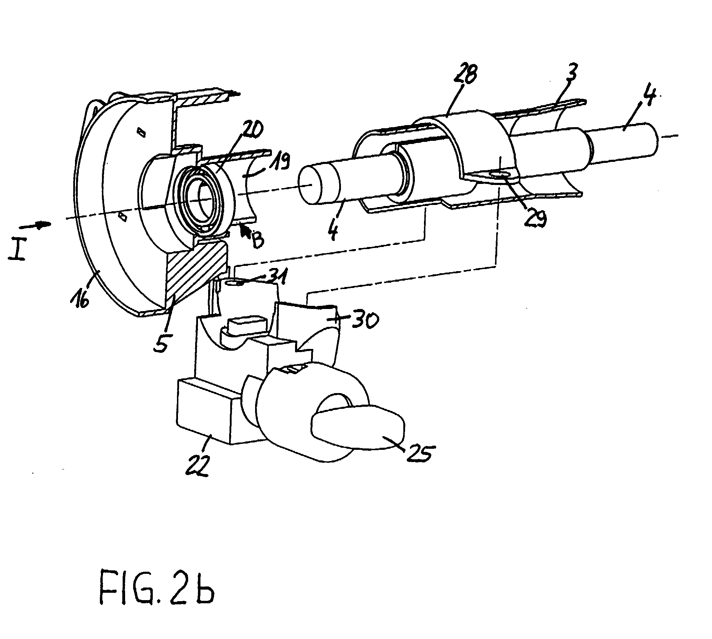

Weiterhin sind der Träger 5, die Leiterplatte 15, der Deckel 16 und die Abdeckplatte 18 mit einer zentralen Öffnung 19 versehen, in die das Mantelrohr 3 eingeführt wird. In die Öffnung 19 des Trägers 5 ist ein Kugellager 20 eingesetzt, das bei der Montage des Trägers 5 auf die Lenksäule 4 aufgeschoben wird. Des weiteren ist an dem Träger 5 ein in Fig. 2b angedeuteter Bajonett-Verschluß B angeordnet, der mit dem Mantelrohr 3 der Lenksäule 4 in Eingriff gebracht wird.

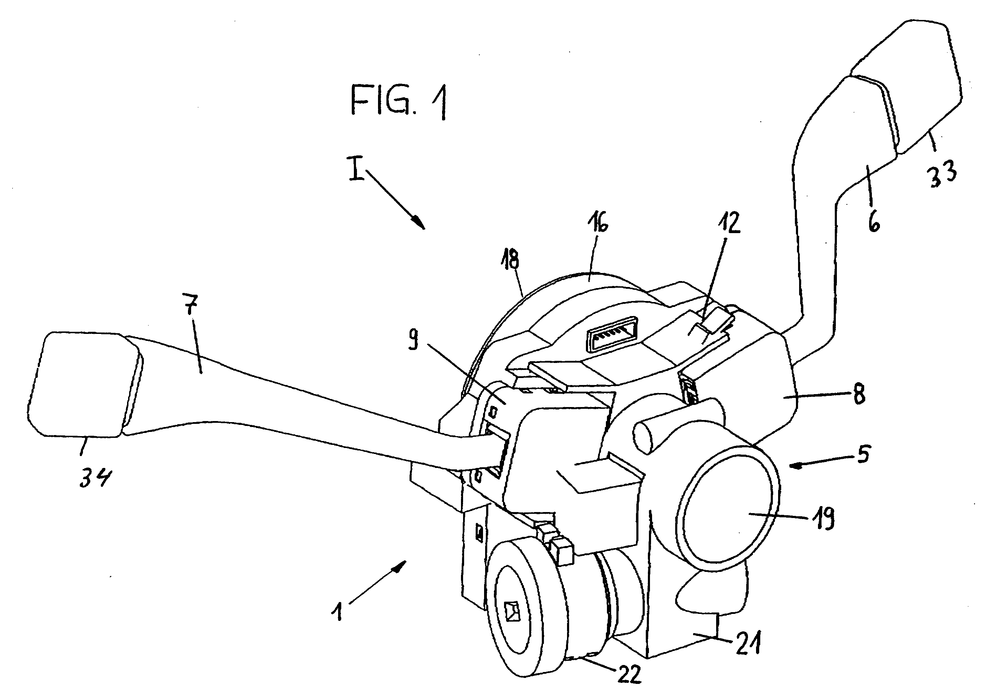

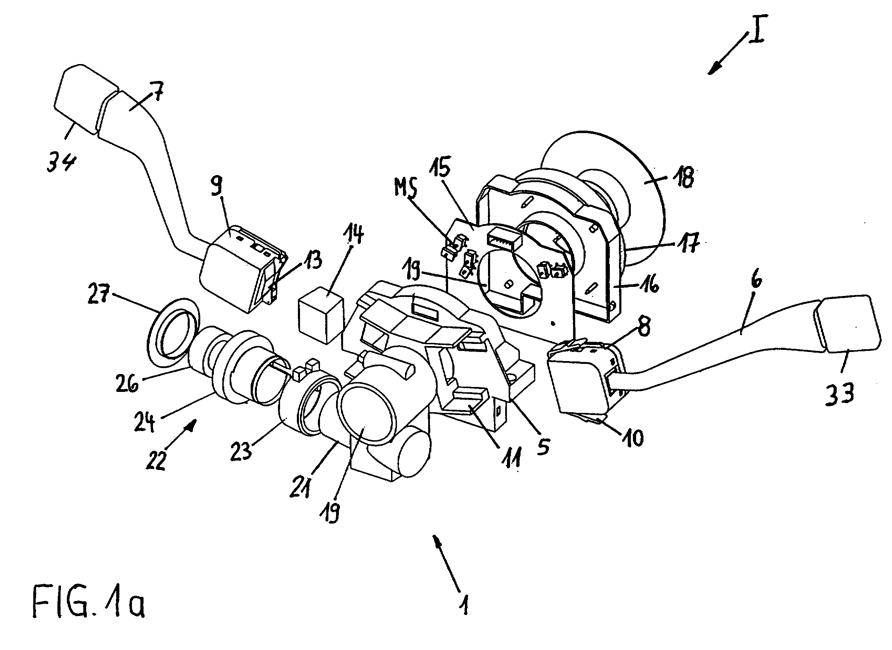

Gemäß der Ausführungsform des Lenkstockschalters 1 nach den Fig. 1 und la ist einstückig am Träger 5 eine Aufnahme 21 für einen Zündanlaßschalter 22 angeformt. Der Zündanlaßschalter 22 umfaßt einen Steuerring 23 für die Zündanlaßschalterfunktionen, ein Modul 24 für die Immobiliserfunktion, die mit einem im Zündschlüssel 25 eingebauten Transponder zusammenwirkt, einem Schließzylinder 26 und einer Schutzkappe 27, die gleichzeitig eine Immobiliser-Antenne einschließt. Diese Einzelteile des Zündanlaßschalters 22 sind aus Fig. 1a ersichtlich. Der Zündanlaßschalter 22 mit seinen Einzelteilen wird in die Aufnahme 21 des Trägers 5 als vorgefertigte Moduleinheit eingesetzt.

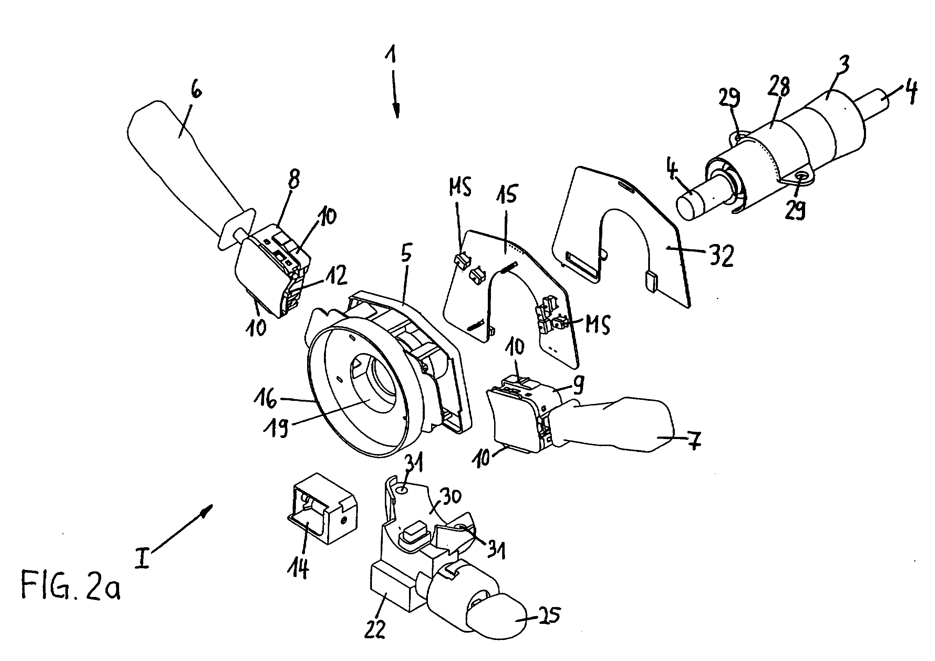

Bei der Ausführungsform des Lenkstockschalters 1 nach den Fig. 2 und 2b ist der Zündanlaßschalter 22 als vom Träger 5 separat zu montierendes Bauteil ausgebildet. Hierbei übergreift im Anschluß an den Träger 5 eine Schelle 28 das Mantelrohr 3, die mit Durchgangslöchern 29 für nicht dargestellte Schrauben versehen ist. Am Zündanlaßschalter 22 ist eine mit Löchern 31 versehene Gegenschelle 30 ausgeformt, die bei Montage des Zündanlaßschalters 22 mit der Schelle 28 durch die Schrauben fest verbunden wird. Bei dieser Ausführungsform des Lenkstockschalters 1 ist die Leiterplatte rückseitig mit einer hinteren Abdeckung 32 abgedeckt.

## Patentansprüche

1. Lenkstockschalter mit einem am Mantelrohr (3) einer Lenksäule (4) eines Kraftfahrzeuges festgelegten Träger (5), der eine mit elektrischen Kontaktelementen (MS) bestückte Leiterplatte (15) aufweist, auf die die Schaltfunktionen mindestens eines am Träger (5) angeordneten Wischer- (9) und/oder Blinker- (8) und/oder Fahrtlichtschalters (33) übertragen werden, wobei der Träger (5) mit den Schaltern (9, 8, 33) als vormontierte modulare Baueinheit an dem Mantelrohr (3) montiert ist, **dadurch gekennzeichnet,** daß
- der Träger (5) einstückig mit einer außenseitigen Aufnahme (21) für einen Zündanlaßschalter (22) ausgebildet ist, und
- die Schaltfunktionen des Zündanlaßschalters (22) über eine mit einem Schlüssel (25) betätigte Nockensteuerung des Zündanlaßschalters (22) auf die Kontaktelemente (MS) der Leiterplatte (15) übertragen werden.

2. Lenkstockschalter nach dem Oberbegriff des Anspruchs 1,
**dadurch gekennzeichnet,** daß
- ein Zündanlaßschalter (22) getrennt vom Träger (5) mittels einer Klemmverbindung (28,30) als vormontierte modulare Baueinheit an dem Mantelrohr (3) befestigt ist, und
- die Schaltfunktionen des Zündanlaßschalters (22) über eine mit einem Schlüssel (25) betätigte Nockensteuerung des Zündanlaßschalters (22) auf die Kontaktelemente (MS) der Leiterplatte (15) übertragen werden.

3. Lenkstockschalter nach Anspruch 2, **dadurch gekennzeichnet,** daß die Klemmverbindung (28,30) aus einer das Mantelrohr (3) übergreifenden Schelle (28) und einer dazu korrespondierenden, am Zündanlaß-schalter (22) ausgebildeten Gegenschelle (30) besteht.

4. Lenkstockschalter nach Anspruch 3, **dadurch gekennzeichnet,** daß die das Mantelrohr (3) übergreifende Schelle (28) mittels Schrauben mit der am Zündanlaßschalter (22) ausgebildeten Gegenschelle (30) verbunden ist.

5. Lenkstockschalter nach einem der Ansprüche 1 bis 4, **dadurch gekennzeichnet,** daß der Wischer- (9) und/oder Blinker- (8) und/oder Fahrtlichtschalter mittels Klipsverbindungen (12) am Träger (5) befestigt ist.

6. Lenkstockschalter nach einem der Ansprüche 1 bis 5 **dadurch gekennzeichnet,** daß der Träger (5) mittels einer Klipsverbindung oder eines Bajonett-Verschlusses (B) auf dem Mantelrohr (3) festgelegt ist, wobei sich der Träger (5) auf einem auf der Lenksäule (4) angeordneten Kugellager (20) abstützt.

7. Lenkstockschalter nach einem der Ansprüche 1 bis 6, **dadurch gekennzeichnet,** daß die elektrischen Kontaktelemente der Leiterplatte (15) als Mikroschalter (MS) ausgebildet sind.

8. Lenkstockschalter nach einem der Ansprüche 1 bis 6, **dadurch gekennzeichnet,** daß die elektrischen Kontaktelemente der Leiterplatte (15) als Schaltkontakte oder dergleichen ausgebildet sind.

9. Lenkstockschalter nach einem der Ansprüche 1 bis 8, **dadurch gekennzeichnet,** daß die Leiterplatte (15) mit einem rechnergesteuerten elektronischen Steuersystem des Kraftfahrzeuges verbunden ist.

10. Lenkstockschalter nach einem der Ansprüche 1 bis 9, **dadurch gekennzeichnet,** daß die Leiterplatte (15) mit einem an dem Träger (5) befestigten Deckel (16) abgedeckt ist.

11. Lenkstockschalter nach einem der Ansprüche 1 bis 10, **dadurch gekennzeichnet,** daß in den Träger (5) ein elektrisches Übertragungssystem (17) für eine Airbag-Einrichtung integriert ist.

12. Lenkstockschalter nach einem der Ansprüche 1 bis 11, **dadurch gekennzeichnet,** daß an dem Träger (5) mindestens ein elektronischer Baustein (14) vormontiert ist.

## Claims

1. Steering column switch, having a support (5), which is securable on the tubular casing (3) of a steering column (4) of an automotive vehicle and has a printed circuit board (15), which is fitted with electrical contact elements (MS) and to which are transmitted the switching functions of at least one wiper switch (9) and/or flasher switch (8) and/or headlight switch (33), which switches are disposed on the support (5), the support (5), together with the switches (9, 8, 33), being mounted on the tubular casing (3) as a pre-assembled modular structural unit, characterised in that
- the support (5) is formed integrally with an external receiving means (21) for an ignition starter switch (22), and
- the switching functions of the ignition starter switch (22) are transmitted to the contact elements (MS) of the printed circuit board (15) via a cam control for the ignition starter switch (22), said cam control being actuated with a key (25).

2. Steering column switch according to the preamble of claim 1, characterised in that
- an ignition starter switch (22) is secured on the tubular casing (3), separately from the support (5), by means of a clamping connection (28, 30) as a pre-assembled modular structural unit, and
- the switching functions of the ignition starter switch (22) are transmitted to the contact elements (MS) of the printed circuit board (15) via a cam control for the ignition starter switch (22), said cam control being actuated with a key (25).

3. Steering column switch according to claim 2, characterised in that the clamping connection (28, 30) comprises a clamp (28), which engages over the tubular casing (3), and a counter-clamp (30), which corresponds to said clamp and is provided on the ignition starter switch (22).

4. Steering column switch according to claim 3, characterised in that the clamp (28), which engages over the tubular casing (3), is connected to the counter-clamp (30), which is provided on the ignition starter switch (22), by means of screws.

5. Steering column switch according to one of claims 1 to 4, characterised in that the wiper switch (9) and/or flasher switch (8) and/or headlight switch are/is secured on the support (5) by means of clip-in connections (12).

6. Steering column switch according to one of claims 1 to 5, characterised in that the support (5) is secured on the tubular casing (3) by means of a clip-in connection or a bayonet-type locking member (B), the support (5) being supported on a ball bearing (20) disposed on the steering column (4).

7. Steering column switch according to one of claims 1 to 6, characterised in that the electrical contact elements of the printed circuit board (15) are microswitches (MS).

8. Steering column switch according to one of claims 1 to 6, characterised in that the electrical contact elements of the printed circuit board (15) are switching contacts or the like.

9. Steering column switch according to one of claims 1 to 8, characterised in that the printed circuit board (15) is connected to a computer-controlled, electronic control system of the automotive vehicle.

10. Steering column switch according to one of claims 1 to 9, characterised in that the printed circuit board (15) is covered with a cover (16) secured on the support (5).

11. Steering column switch according to one of claims 1 to 10, characterised in that an electrical transmission system (17) for an airbag arrangement is incorporated in the support (5).

12. Steering column switch according to one of claims 1 to 11, characterised in that at least one electronic component (14) is pre-assembled on the support (5).

## Revendications

1. Interrupteur de colonne de direction, comportant un support (5) qui est fixé au tube d'enveloppe (3) d'une colonne de direction (4) d'un véhicule automobile et qui présente une plaquette à circuit imprimé (15) équipée d'éléments de contact électriques (MS) à laquelle sont transmises les fonctions de commutation d'au moins un interrupteur d'essuie-glace (9) et/ou un interrupteur de clignotant (8) et/ou un interrupteur d'éclairage (33) du véhicule, disposés sur le support (5), le support (5) avec les interrupteurs (9, 8, 33) étant monté sur le tube d'enveloppe (3) sous la forme d'un composant modulaire prémonté, caractérisé en ce que
- le support (5) est réalisé d'une seule pièce avec un logement (21) extérieur pour un contacteur d'allumage et de démarrage (22) et
- les fonctions de commutation du contacteur d'allumage et de démarrage (22) sont transmises, par l'intermédiaire d'une commande à came, actionnée au moyen d'un clé (25), du contacteur d'allumage et de démarrage (22) aux éléments de contact (MS) de la plaquette à circuit imprimé (15).

2. Interrupteur de colonne de direction selon le préambule de la revendication 1, caractérisé en ce que
- un contacteur d'allumage et de démarrage (22) est fixé, séparément du support (5), au tube d'enveloppe (3) au moyen d'une liaison par serrage (28, 30), en tant que composant modulaire prémonté, et
- les fonctions de commutation du contacteur d'allumage et de démarrage (22) sont transmises par l'intermédiaire d'une commande à came actionnée au moyen d'une clé (25) du contacteur d'allumage et de démarrage (22) aux éléments de contact (MS) de la plaquette à circuit imprimé (15).

3. Interrupteur de colonne de direction selon la revendication 2, caractérisé en ce que la liaison par serrage (28, 30) est constituée d'un collier (28) qui passe sur le tube d'enveloppe (3) et d'un contre-collier (30) correspondant au premier, formé sur le contacteur d'allumage et de démarrage (22).

4. Interrupteur de colonne de direction selon la revendication 3, caractérisé en ce que le collier (28), qui passe sur le tube d'enveloppe (3), est assemblé au moyen de vis au contre-collier (30) formé sur le contacteur d'allumage et de démarrage (22).

5. Interrupteur de colonne de direction selon l'une des revendications 1 à 4, caractérisé en ce que l'interrupteur d'essuie-glace (9) et/ou l'interrupteur de clignotant (8) et/ou l'interrupteur d'éclairage du véhicule sont fixés au support (5), au moyen d'assemblages clipsés (12).

6. Interrupteur de colonne de direction selon l'une des revendications 1 à 5, caractérisé en ce que le support (5) est fixé sur le tube d'enveloppe (3), au moyen d'un assemblage clipsé ou d'une fermeture à baïonnette (B), le support (5) prenant appui sur un palier de roulement à billes (20) disposé sur la colonne de direction (4).

7. Interrupteur de colonne de direction selon l'une des revendications 1 à 6, caractérisé en ce que les éléments de contact électriques de la plaquette à circuit imprimé (15) sont réalisés sous la forme de micro-interrupteurs (MS).

8. Interrupteur de colonne de direction selon l'une des revendications 1 à 6, caractérisé en ce que les éléments de contact électriques de la plaquette à circuit imprimé (15) sont réalisés sous la forme de contacts de commutation ou analogues.

9. Interrupteur de colonne de direction selon l'une des revendications 1 à 8, caractérisé en ce que la plaquette à circuit imprimé (15) est reliée à un système de commande électronique assisté par ordinateur du véhicule automobile.

10. Interrupteur de colonne de direction selon l'une des revendications 1 à 9, caractérisé en ce que la plaquette à circuit imprimé (15) est recouverte par un couvercle (16) fixé au support (5).

11. Interrupteur de colonne de direction selon l'une des revendications 1 à 10, caractérisé en ce qu'un système de transmission électrique (17) pour un système d'airbag est intégré dans le support (5).

12. Interrupteur de colonne de direction selon l'une des revendications 1 à 11, caractérisé en ce qu'au moins un composant électronique (14) est prémonté sur le support (5).
